# EUROPEAN PATENT SPECIFICATION

(11) **EP 2 546 311 B1**
(45) Date of publication and mention of the grant of the patent: **10.12.2014**
(21) Application number: 12172180.7
(22) Date of filing: 15.06.2012
(51) Int. Cl.: C09D 11/00, C09D 11/10

(54) **Inkjet ink composition and inkjet recording method**
Tintenstrahltintenzusammensetzung und Tintenstrahlaufzeichnungsverfahren
Composition d'encre pour jet d'encre et procédé d'enregistrement à jet d'encre

(30) Priority: 12.07.2011 JP 2011153699
(43) Date of publication of application: 16.01.2013
(73) Proprietor: Fujifilm Corporation, Minato-ku Tokyo (JP)
(72) Inventor: Hayata, Yuuichi, Kanagawa (JP)
(74) Representative: Hoffmann Eitle

(56) References cited:
- EP-A2- 1 637 926
- WO-A1-2010/125373

## Description

The present invention relates to an inkjet ink composition and an inkjet recording method.

As image recording methods for forming an image on a recording medium such as paper based on an image data signal, there are an electrophotographic system, sublimation type and melt type thermal transfer systems, an inkjet system, etc.

With regard to the inkjet system, the printing equipment is inexpensive, it is not necessary to use a plate when printing, and since an image is formed directly on a recording medium by discharging an ink composition only on a required image area, the ink composition can be used efficiently and the running cost is low, particularly in the case of small lot production. Furthermore, there is little noise and it is excellent as an image recording system, and has been attracting attention in recent years.

Among them, an inkjet recording ink composition (radiation-curing inkjet recording ink composition), which is curable upon exposure to radiation such as UV rays, is an excellent system from the viewpoint of it being possible to print on various types of recording media because, compared with a solvent-based ink composition, the drying properties are excellent and an image is resistant to spreading since the majority of the components in the ink composition cure upon exposure to radiation such as UV rays. Examples of a conventional ink composition for inkjet recording are described in JP-A-2009-67963 (JP-A denotes a Japanese unexamined patent application publication), Published Japanese translation of PCT application No. 2009-534514, International Patent Application WO 2009/045703, or Published Japanese translation of PCT application No. 2009-542833.

It is an object of the present invention to provide an inkjet ink composition that can give an image having inconspicuous stripe unevenness, for which stretchability and scratch resistance can be achieved at the same time, and that has excellent discharge stability, and an inkjet recording method employing the inkjet ink composition.

The object of the present invention has been attained by means described in <1> and <11>. They are described below together with <2> to <10>, which are preferred embodiments.
<1> An inkjet ink composition comprising (Component A-1) a compound represented by Formula (1), (Component A-2) an *N*-vinyllactam and/or tetrahydrofurfuryl acrylate, (Component B) a polymerization initiator, and (Component C) an inert methyl methacrylate homopolymer and/or copolymer having a weight-average molecular weight of 4,000 to 120,000, Component C having a content of at least 0.3 wt% but less than 2.0 wt% relative to the total weight of the ink composition, 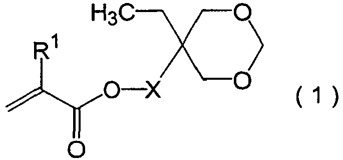 (In Formula (1), R¹ denotes a hydrogen atom or a methyl group and X denotes a single bond or a divalent linking group.)
<2> the inkjet ink composition according to <1> above, wherein the inkjet ink composition further comprises a monofunctional (meth)acrylate compound other than Component A-1 and Component A-2,
<3> the inkjet ink composition according to <2> above, wherein the monofunctional (meth)acrylate compound other than Component A-1 and Component A-2 is isobornyl (meth)acrylate and/or phenoxyethyl (meth)acrylate,
<4> the inkjet ink composition according to any one of <1> to <3> above, wherein the content of Component C is 0.8 to 1.8 wt% relative to the total weight of the ink composition,
<5> the inkjet ink composition according to any one of <1> to <4> above, wherein the inkjet ink composition further comprises a polyfunctional (meth)acrylate compound at 0.01 to 5.0 wt% relative to the total weight of the ink composition,
<6> the inkjet ink composition according to any one of <1> to <5> above, wherein the inkjet ink composition has a surface tension at 25°C of 33.0 to 39.0 mN/m,
<7> the inkjet ink composition according to any one of <1> to <6> above, wherein the inkjet ink composition either does not comprise a silicone-based surfactant or a fluorine-based surfactant or comprises a silicone-based surfactant and a fluorine-based surfactant at a total content of less than 0.1 wt% relative to the entire weight of the inkjet ink composition,
<8> the inkjet ink composition according to any one of <1> to <7> above, wherein the weight-average molecular weight of Component C is 10,000 to 70,000,
<9> the inkjet ink composition according to any one of <1> to <8> above, wherein Component C is a methyl methacrylate homopolymer and/or a copolymer having a methyl methacrylate-derived repeating unit proportion of at least 30.0 wt%,
<10> the inkjet ink composition according to any one of <1> to <9> above, wherein Component C is a methyl methacrylate homopolymer and/or a methyl methacrylate/*n*-butyl methacrylate copolymer, and
<11> an inkjet recording method comprising (a¹) a step of discharging the inkjet ink composition according to any one of <1> to <10> above onto a recording medium and (b¹) a step of curing the inkjet ink composition by irradiating the discharged inkjet ink composition with actinic radiation.

In accordance with the present invention, there can be provided an inkjet ink composition that can give an image having inconspicuous stripe unevenness, for which stretchability and scratch resistance can be achieved at the same time, and that has excellent discharge stability, and an inkjet recording method employing the inkjet ink composition.

The present invention is explained in detail below.

### (Inkjet ink composition)

The inkjet ink composition of the present invention (hereinafter, also called simply an 'ink composition') comprises (Component A-1) a compound represented by Formula (1), (Component A-2) an *N*-vinyllactam and/or tetrahydrofurfuryl acrylate, (Component B) a polymerization initiator, and (Component C) an inert methyl methacrylate homopolymer and/or copolymer having a weight-average molecular weight of 4,000 to 120,000, Component C having a content of at least 0.3 wt% but less than 2.0 wt% relative to the total weight of the ink composition. 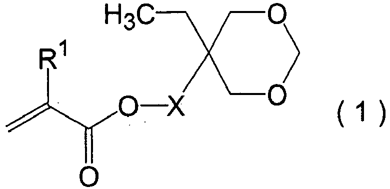 (In Formula (1), R¹ denotes a hydrogen atom or a methyl group and X denotes a single bond or a divalent linking group.)

In addition, in the present invention, the notation 'A to B', which expresses a numerical range, has the same meaning as 'at least A but no greater than B'. Furthermore, '(Component A-1) compound represented by Formula (1)', etc. above may also be simply referred to as 'Component A-1', etc.

Moreover, in the present invention, '(meth)acrylate' denotes acrylate or methacrylate.

The ink composition of the present invention is an oil-based ink composition that can be cured with actinic radiation (also called 'active energy radiation'). The 'actinic radiation' referred to here is radiation that can provide energy that enables an initiating species to be generated in the ink composition when irradiated, and includes α rays, γ rays, X rays, UV, visible light, and an electron beam. Among these, UV and an electron beam are preferable from the viewpoint of curing sensitivity and the availability of equipment, and UV is more preferable.

With regard to the ink composition of the present invention, due to the combination of Components A-1 and A-2, Component B, and Component C with the content of Component C being at least 0.3 wt% but less than 2.0 wt% relative to the total weight of the ink composition, an inkjet ink composition that can give an image having inconspicuous stripe unevenness, for which stretchability and scratch resistance can be achieved at the same time, and that has excellent discharge stability can be obtained.

It is surmised that stripe unevenness of an inkjet image is caused by fired droplet interference due to poor internal curability of a cured film formed by imagewise fired droplets in a discharge step and a curing step or caused by fired droplet shape due to low image surface gloss. It is surmised that due to the ink composition of the present invention comprising in combination Components A-1 and A-2, Component B, and Component C with the content of Component C being at least 0.3 wt% but less than 2.0 wt% relative to the total weight of the ink composition, the image surface immediately after curing starts is maintained in a liquid state to thus give high surface gloss and thereby achieve inconspicuous stripe unevenness; in addition, introduction of Component C, which has high hardness, improves internal curability to thus suppress fired droplet interference, thereby giving an image having yet further inconspicuous stripe unevenness.

It is surmised that the higher the surface hardness of a cured image film formed from fired droplets, the better the scratch resistance of an inkjet image. It is therefore surmised that, with regard to scratch resistance, a cured image film having particularly high surface hardness will be obtained by combining a compound of Component A-1, which has a rigid skeleton, and Component C, which has high hardness, with the content of Component C being at least 0.3 wt% but less than 2.0 wt% relative to the total weight of the ink composition.

Although it is not clear why stretchability and scratch resistance can be achieved at the same time, it is surmised that it is due to the effect brought about by the combination of Components A-1 and A-2, Component B, and Component C with the content of Component C being at least 0.3 wt% but less than 2.0 wt% relative to the total weight of the ink composition.

Furthermore, due to the ink composition of the present invention comprising in combination Components A-1 and A-2, Component B, and Component C with the content of Component C being at least 0.3 wt% but less than 2.0 wt% relative to the total weight of the ink composition, even if a polymer such as Component C is contained, the discharge stability is excellent.

Each component of the ink composition of the present invention, values for the physical properties thereof, etc. are explained below.

### (Component A-1) Compound represented by Formula (1)

The compound represented by Formula (1), which is used as Component A-1 of the ink composition of the present invention, is explained below. 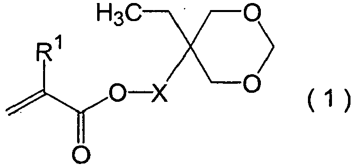 (In Formula (1), R¹ denotes a hydrogen atom or a methyl group and X denotes a single bond or a divalent linking group.)

The compound represented by Formula (1) may be an acrylate compound or a methacrylate compound, but it is preferable that it is an acrylate compound, that is, R¹ is a hydrogen atom.

The divalent linking group as X in Formula (1) is not particularly limited as long as the effects of the present invention are not greatly impaired, but is preferably a divalent hydrocarbon group or a divalent linking group formed by combining a hydrocarbon group and at least one bond selected from the group consisting of an ester bond, a urethane bond, a urea bond, an ether bond, and an amide bond.

X is preferably a divalent hydrocarbon group. The divalent hydrocarbon group is preferably a divalent hydrocarbon group having 1 to 20 carbons, and more preferably a divalent hydrocarbon group having 1 to 5 carbons; among the hydrocarbon groups an alkylene group is preferable, and a methylene group, which has 1 carbon, is particularly preferable.

When X is a divalent linking group formed by combining a hydrocarbon group and at least one bond selected from the group consisting of an ester bond, a urethane bond, a urea bond, an ether bond, and an amide bond, the hydrocarbon group is preferably an alkylene group having 1 to 5 carbons. It is preferably a divalent linking group formed by combining at least one alkylene group and at least one bond selected from the group consisting of an ester bond (-COO- or -OCO-), a urethane bond (-NRCOO- or -OCONR- (R denotes a hydrogen atom or an alkyl group)), a urea bond (-NRCONR'- (R and R' denote a hydrogen atom or an alkyl group)), an ether bond (-O-), and an amide bond (-NRCO- or -CONR- (R denotes a hydrogen atom or an alkyl group)). Among these, a divalent linking group formed by combining at least one alkylene group and at least one ether bond is more preferable.

The divalent linking group formed by combining an alkylene group and an ether bond is preferably *-(alkylene group)-O-** or *-(alkylene group)-O-(alkylene group)-** (* denotes the site at which X and the O of the (meth)acryloxy group are bonded, and ** denotes the site at which X and the quaternary carbon atom are bonded).

The divalent linking group formed by combining an alkylene group and an ether bond is preferably a poly(alkyleneoxy) group or poly(alkyleneoxy)alkyl group, which have a plurality of -(alkylene group)-O-moieties, and in this case the total number of carbons in the linking group is preferably 1 to 60, and more preferably 1 to 20.

Specific preferred examples of the compound represented by Formula (1) include, but are not limited to, Compounds (A-1-1) to (A-1-4) shown below.

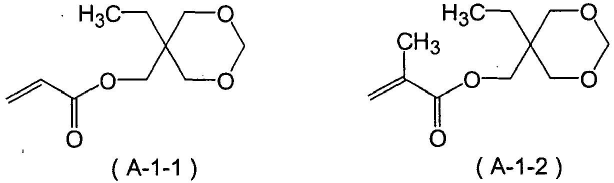

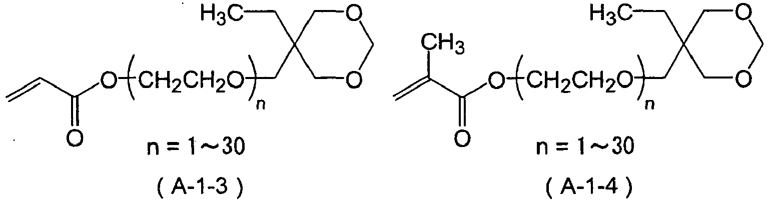

Among them, cyclic trimethylolpropane formal acrylate (A-1-1) and cyclic trimethylolpropane formal methacrylate (A-1-2) are more preferable, and cyclic trimethylolpropane formal acrylate (A-1-1) is particularly preferable.

The content of Component A-1 in the ink composition of the present invention is preferably 10 to 80 wt% of the entire ink composition, more preferably 20 to 70 wt%, and particularly preferably 25 to 60 wt%. When in the above-mentioned range, an ink composition having inconspicuous stripe unevenness and excellent scratch resistance is obtained.

### (Component A-2) N-Vinyllactam and/or tetrahydrofurfuryl acrylate

The ink composition of the present invention comprises as Component A-2 an *N*-vinyllactam and/or tetrahydrofurfuryl acrylate.

The compound as Component A-2 is a polymerizable compound having a cyclic structure in the molecule and a relatively small molecular weight, and due to it being contained an ink composition having good curability is obtained. The compound as Component A-2 preferably has a molecular weight of no greater than 160.

*N*-vinyllactams that can be used as Component A-2 are explained below.

### <N-vinyllactam>

The ink composition of the present invention preferably comprises an *N*-vinyllactam as Component A-2. An *N*-vinyllactam is preferably a compound represented by Formula (a).

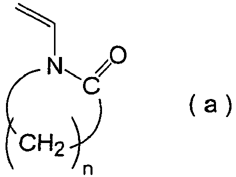

In Formula (a), n denotes an integer of 2 to 6; n is preferably an integer of 3 to 5 from the viewpoint of flexibility after the ink composition is cured, adhesion to a recording medium, and ready availability of starting materials, n is more preferably 3 or 5, and n is particularly preferably 5, which is *N*-vinylcaprolactam. *N*-vinylcaprolactam is preferable since it has excellent safety, is commonly used and is readily available at a relatively low price, and gives particularly good ink curability and adhesion of a cured film to a recording medium.

The *N*-vinyllactam may have a substituent such as an alkyl group or an aryl group on the lactam ring, and may have a saturated or unsaturated ring structure bonded to the lactam ring.

The compound represented by Formula (a) may be used singly or in a combination of two or more compounds.

The ink composition of the present invention preferably comprises tetrahydrofurfuryl acrylate as Component A-2. Tetrahydrofurfuryl acrylate is the compound represented by Formula (a-2).

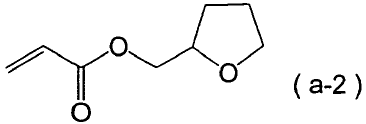

The content of Component A-2 in the ink composition of the present invention, that is, the total content of an *N*-vinyllactam and tetrahydrofurfuryl acrylate, is preferably 5 to 30 wt% relative to the total weight of the ink composition, more preferably 7.5 to 25 wt%, and yet more preferably 10 to 20 wt%. When in the above-mentioned range, the curability of the interior of a printed material is strongly promoted, and an ink composition having excellent curability and suppressed stripe unevenness is obtained.

A preferred embodiment for Component A-1 and Component A-2 in the ink composition of the present invention is an embodiment in which cyclic trimethylolpropane formal acrylate and N-vinylcaprolactam are used in combination.

### <Other polymerizable compound>

The ink composition of the present invention may further comprise a polymerizable compound other than Component A-1 and Component A-2.

As the other polymerizable compound, a known polymerizable compound may be used, and examples thereof include a (meth)acrylate compound other than Components A-1 and A-2, a vinyl ether compound, an allyl compound, an *N*-vinyl compound, and an unsaturated carboxylic acid. Examples further include radically polymerizable monomers described in JP-A-2009-221414, polymerizable compounds described in JP-A-2009-209289, and ethylenically unsaturated compounds described in JP-A-2009-191183.

The polymerizable compound other than Component A-1 and Component A-2 is not particularly limited but is preferably an ethylenically unsaturated compound. It is more preferable that a monofunctional (meth)acrylate compound other than Component A-1 and Component A-2 is further contained.

As the monofunctional (meth)acrylate compound other than Component A-1 and Component A-2, a compound represented by Formula (2) may preferably be used. 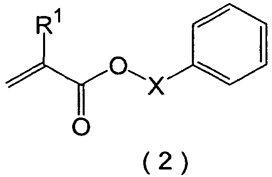 (In Formula (2), R¹ denotes a hydrogen atom or a methyl group and X denotes a single bond or a divalent linking group.)

R¹ in Formula (2) denotes a hydrogen atom or a methyl group and is preferably a hydrogen atom in terms of cure rate.

X in Formula (2) is preferably for example an alkylene group or a group formed by combining at least one alkylene group and at least one bond selected from the group consisting of an ether bond, an ester bond, a urethane bond, and a urea bond; preferred examples include an alkylene group, an alkyleneoxy group, and a polyalkyleneoxy group.

The alkylene group, alkyleneoxy group, or polyalkyleneoxy group preferably has 2 to 10 carbons, more preferably 2 to 4 carbons, and particularly preferably 2 carbons. Furthermore, the alkylene group, alkyleneoxy group, or polyalkyleneoxy group may have a substituent, examples of the substituent including an alkyl group, an aryl group, a halogen atom, and a hydroxy group.

Among these, the compound represented by Formula (2) is preferably phenoxyethyl (meth)acrylate, and is particularly preferably phenoxyethyl acrylate.

Furthermore, other examples of the monofunctional (meth)acrylate compound other than Component A-1 and Component A-2 include norbornyl (meth)acrylate, isobornyl (meth)acrylate, cyclohexyl (meth)acrylate, cyclopentyl (meth)acrylate, cycloheptyl (meth)acrylate, cyclooctyl (meth)acrylate, cyclodecyl (meth)acrylate, dicyclodecyl (meth)acrylate, 3,3,5-trimethylcyclohexyl (meth)acrylate, 4-*t*-butylcyclohexyl (meth)acrylate, acryloylmorpholine, *N*-phthalimidoethyl (meth)acrylate, pentamethylpiperidyl (meth)acrylate, tetramethylpiperidyl (meth)acrylate, 5-(meth)acryloyloxymethyl-5-ethyl-1,3-dioxacyclohexane, 2-ethylhexyl (meth)acrylate, 2-hydroxyethyl (meth)acrylate, 2-butoxyethyl (meth)acrylate, carbitol (meth)acrylate, methyl (meth)acrylate, *n*-butyl (meth)acrylate, 2-(2-ethoxyethoxy)ethyl (meth)acrylate, 2-(2-butoxyethoxy)ethyl (meth)acrylate, and dimethylaminomethyl (meth)acrylate.

Among these, isobornyl (meth)acrylate is preferable, and isobornyl acrylate is particularly preferable.

It is preferable for the other polymerizable compound to comprise a monofunctional (meth)acrylate compound having an aromatic group. A cyclic structure of the aromatic group of the monofunctional (meth)acrylate compound having an aromatic group may contain a heteroatom such as O, N, or S.

Examples of the monofunctional (meth)acrylate compound having an aromatic group other than the compound represented by Formula (2) include 1-naphthyl (meth)acrylate, 2-naphthyl (meth)acrylate, 2-α-naphthyloxyethyl (meth)acrylate, 2-β-naphthyloxyethyl (meth)acrylate, 2-anthryl (meth)acrylate, 9-anthryl (meth)acrylate, 1-phenanthryl (meth)acrylate, 2-phenanthryl (meth)acrylate, an ethylene oxide-modified cresol (meth)acrylate (hereinafter, 'ethylene oxide' is also called 'EO'), *p*-nonylphenoxyethyl (meth)acrylate, *p-*nonylphenoxypolyethylene glycol (meth)acrylate, *p*-cumylphenoxyethylene glycol (meth)acrylate, 2-furyl (meth)acrylate, 2-furfuryl (meth)acrylate, 2-thienyl (meth)acrylate, 2-thenyl (meth)acrylate, 1-pyrrolyl (meth)acrylate, 2-pyridyl (meth)acrylate, 2-quinolyl (meth)acrylate, *N*-(1,1-dimethyl-2-phenyl)ethyl (meth)acrylamide, *N*-diphenylmethyl (meth)acrylamide, *N-*phthalimidomethyl (meth)acrylamide, and *N*-(1,1'-dimethyl-3-(1,2,4-triazol-1-yl))propyl (meth)acrylamide.

The ink composition of the present invention may preferably further comprise as a polymerizable compound a polyfunctional (meth)acrylate compound other than Component A-1 and Component A-2.

As the polyfunctional (meth)acrylate compound, a difunctional (meth)acrylate compound or a tri- or higher-functional (meth)acrylate compound may preferably be used.

Examples of the difunctional (meth)acrylate include ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, dipropylene glycol di(meth)acrylate, tripropylene glycol di(meth)acrylate, tetrapropylene glycol di(meth)acrylate, polypropylene glycol diacrylate, 2,2-bis(4-(meth)acryloxypolyethoxyphenyl)propane, and bis(4-(meth)acryloxypolyethoxyphenyl)propane.

Among these, dipropylene glycol di(meth)acrylate is preferable, and dipropylene glycol diacrylate is particularly preferable.

As the difunctional (meth)acrylate compound, a difunctional (meth)acrylate compound having an optionally branched hydrocarbon chain having 5 or more carbons may preferably be used.

Preferred examples of the difunctional (meth)acrylate compound include difunctional (meth)acrylate compounds having a hydrocarbon chain having 5 or more carbons in the molecule, and specific examples thereof include neopentyl glycol di(meth)acrylate, a propylene oxide (PO)-modified neopentyl glycol di(meth)acrylate, hexanediol di(meth)acrylate, a PO-modified hexanediol di(meth)acrylate, nonanediol di(meth)acrylate, decanediol di(meth)acrylate, dodecanediol di(meth)acrylate, tridecanediol di(meth)acrylate, octadecanediol di(meth)acrylate, 3-methyl-1,5-pentanediol di(meth)acrylate, 2-*n*-butyl-2-ethyl-1,3-propanediol di(meth)acrylate, cyclohexanedimethanol di(meth)acrylate, and cyclohexanediol di(meth)acrylate.

Preferred examples of the trifunctional (meth)acrylate compound include pentaerythritol tri(meth)acrylate, trimethylolethane tri(meth)acrylate, and trimethylolpropane tri(meth)acrylate. Preferred examples of tetrafunctional (meth)acrylate compounds include pentaerythritol tetra(meth)acrylate and dipentaerythritol tetra(meth)acrylate.

Examples of the other polymerizable compound include unsaturated carboxylic acids such as acrylic acid, methacrylic acid, itaconic acid, crotonic acid, isocrotonic acid, and maleic acid, and salts thereof, an ethylenically unsaturated group-containing anhydride, acrylonitrile, styrene and, furthermore, radically polymerizable compounds such as various types of unsaturated polyesters, unsaturated polyethers, unsaturated polyamides, and unsaturated urethane.

Examples of other polymerizable compound include *N*-methylol (meth)acrylamide, diacetone (meth)acrylamide, and (meth)acrylic acid derivatives such as epoxy (meth)acrylate, allyl compound derivatives such as allyl glycidyl ether, diallyl phthalate, triallyl trimellitate, etc.

More specifically, commercially available or industrially known radically polymerizable or crosslinking monomers, oligomers, and polymers, such as those described in 'Kakyozai Handobukku' (Crosslinking Agent Handbook), Ed. S. Yamashita (Taiseisha, 1981); 'UV/EB Koka Handobukku (Genryo)' (UV/EB Curing Handbook (Starting Materials)) Ed. K. Kato (Kobunshi Kankoukai, 1985); 'UV/EB Koka Gijutsu no Oyo to Shijyo' (Application and Market of UV/EB Curing Technology), p. 79, Ed. RadTech (CMC, 1989); and E. Takiyama 'Poriesuteru Jushi Handobukku' (Polyester Resin Handbook), (The Nikkan Kogyo Shimbun Ltd., 1988) may be used.

The molecular weight of the other polymerizable monomer is preferably 80 to 2,000, more preferably 80 to 1,000, and yet more preferably 80 to 800.

Furthermore, as the other polymerizable compound, it is preferable to use a monofunctional vinyl ether compound.

Examples of the monofunctional vinyl ether compound that are preferably used include ethylene glycol monovinyl ether, triethylene glycol monovinyl ether, hydroxyethyl monovinyl ether, ethyl vinyl ether, *n*-butyl vinyl ether, isobutyl vinyl ether, octadecyl vinyl ether, cyclohexyl vinyl ether, hydroxybutyl vinyl ether, 2-ethylhexyl vinyl ether, hydroxynonyl monovinyl ether, cyclohexanedimethanol monovinyl ether, *n*-propyl vinyl ether, isopropyl vinyl ether, dodecyl vinyl ether, and diethylene glycol monovinyl ether.

Furthermore, a polyfunctional vinyl ether can be used.

Examples of polyfunctional vinyl ether compounds that are preferably used include di- or tri-vinyl ether compounds such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether, and trimethylolpropane trivinyl ether.

When the ink composition of the present invention comprises a polymerizable compound other than Components A-1 and A-2, the content of the monofunctional (meth)acrylate compound other than Components A-1 and A-2 is preferably 1 to 70 wt% relative to the total weight of the ink composition, more preferably 5 to 60 wt%, and particularly preferably 9 to 50 wt%. Furthermore, the content of the polyfunctional (meth)acrylate compound other than Components A-1 and A-2 is preferably 0.01 to 10.0 wt% relative to the total weight of the ink composition, more preferably 0.01 to 5.0 wt%, and particularly preferably 2.0 to 5.0 wt%.

### <Surface tension of ink composition>

The ink composition of the present invention preferably has a surface tension at 25°C of 33.0 to 39.0 mN/m, more preferably 34.0 to 39.0 mN/m, yet more preferably 35.0 to 39.0 mN/m, and particularly preferably 36.0 to 39.0 mN/m.

When the surface tension at 25°C is in the above-mentioned range, excellent discharge stability and excellent image surface gloss are obtained.

With regard to a method for measuring the surface tension of the ink composition, a method in which measurement is carried out by a ring method using a normal surface tensiometer (e.g. a SIGMA 702 surface tensiometer, KSV INSTRUMENTS LTD, etc.), at a liquid temperature of 25°C can be cited as an example.

### (Component B) Polymerization initiator

The ink composition of the present invention comprises (Component B) a polymerization initiator. An ink composition discharged onto a support is cured by irradiating with actinic radiation. This is due to the polymerization initiator contained in the ink composition of the present invention undergoing decomposition by irradiation with actinic radiation to thus generate a polymerization-initiating species such as a radical, and the initiating species functioning to cause and promote a polymerization reaction of a polymerizable compound.

The polymerization initiator in the present invention includes not only a compound that generates a polymerization-initiating species by absorbing external energy such as actinic radiation but also a compound that promotes decomposition of a polymerization initiator by absorbing specific actinic radiation (a so-called sensitizer).

If a sensitizer is present together with the polymerization initiator in the ink composition of the present invention, the sensitizer in the system absorbs actinic radiation to thus attain an excited state and comes into contact with the polymerization initiator to promote decomposition of the polymerization initiator, thereby enabling a more sensitive curing reaction to be achieved. Examples of the sensitizer include those described in JP-A-2008-208190.

The polymerization initiator is a polymerization initiator that is used in a radical polymerization reaction, and the ink composition of the present invention comprises at least (Component B-1) a bisacylphosphine compound, (Component B-2) a thioxanthone compound, or (Component B-3) an α-hydroxyketone compound as a polymerization initiator. In accordance with the initiator, Components A-1 and A-2, and Component C being combined, an ink composition has excellent discharge stability, and can give an image having inconspicuous stripe unevenness.

Components B-1 to B-3 are explained below.

### <(Component B-1) Bisacylphosphine compound>

The bisacylphosphine compound is not particularly limited; a known compound may be used, and a compound represented by Formula (b-1) below is preferable. 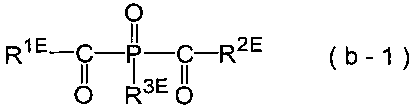 (In Formula (b-1), R^{1E}, R^{2E}, and R^{3E} independently denote an aromatic hydrocarbon group that may have a methyl group or an ethyl group as a substituent.)

As the bisacylphosphine compound, a known bisacylphosphine oxide compound may be used. Examples thereof include bisacylphosphine oxide compounds described in JP-A-3-101686, JP-A-5-345790, and JP-A-6-298818.

Specific examples thereof include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Among them, the bisacylphosphine compound is preferably bis(2,4,6-trimethylbenzoyl)phenylphosphine oxide (IRGACURE 819: Ciba Japan), bis(2,6-dimethoxybenzoyl)-2,4,4-trimethylpentylphenylphosphine oxide, etc.

The content of Component B-1 is preferably 2 to 7 wt% relative to the weight of the entire ink composition, and more preferably 3 to 6 wt%.

### <(Component B-2) Thioxanthone compound>

The ink composition of the present invention may preferably comprise (Component B-2) a thioxanthone compound.

The thioxanthone compound is not particularly limited; a known compound may be used, and a compound represented by Formula (b-2) below is preferable.

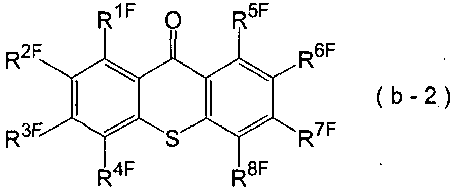

In Formula (b-2) above, R^{1F}, R^{2F}, R^{3F}, R^{4F}, R^{5F}, R^{6F}, R^{7F}, and R^{8F} independently denote a hydrogen atom, an alkyl group, a halogen atom, a hydroxy group, a cyano group, a nitro group, an amino group, an alkylthio group, an alkylamino group (The alkylamino group includes the case of monoalkylsubstituted amino group and dialkylsubstituted amino group. It is same also in the following.), an alkoxy group, an alkoxycarbonyl group, an acyloxy group, an acyl group, a carboxy group, or a sulfo group. The number of carbon atoms of an alkyl moiety in the alkyl group, alkylthio group, alkylamino group, alkoxy group, alkoxycarbonyl group, acyloxy group, and acyl group is preferably 1 to 20, more preferably 1 to 8, and yet more preferably 1 to 4.

Two of R^{1F}, R^{2F}, R^{3F}, R^{4F}, R^{5F}, R^{6F}, R^{7F}, and R^{8F} that are adjacent may be joined to each other to form a ring. When they form a ring, examples of the ring structure include a 5- or 6-membered aliphatic or aromatic ring; it may be a heterocyclic ring containing an element other than a carbon atom, and rings thus formed may be further combined to form a bicyclic ring, for example a fused ring. These ring structures may further have a substituent. Examples of the substituent include a halogen atom, a hydroxy group, a cyano group, a nitro group, an amino group, an alkylthio group, an alkylamino group, an alkoxy group, an alkoxycarbonyl group, an acyloxy group, an acyl group, a carboxy group, and a sulfo group. Examples of a heteroatom when the resulting ring structure is a heterocyclic ring include N, O, and S.

Examples of the thioxanthone compound include thioxanthone, 2-isopropylthioxanthone, 4-isopropylthioxanthone, 2-chlorothioxanthone, 2-dodecylthioxanthone, 2,4-dichlorothioxanthone, 2,3-diethylthioxanthone, 1-chloro-4-propoxythioxanthone, 2-cyclohexylthioxanthone, 4-cyclohexylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl)thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, *N-*allylthioxanthone-3,4-dicarboximide, *N*-*n*-octylthioxanthone-3,4-dicarboxyimide, *N*-(1,1,3,3-tetramethylbutyl)thioxanthone-3,4-dicarboxyimide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthon-2-yloxy)-*N*,*N*,*N-*trimethyl-1-propanaminium chloride. Among them, from the viewpoint of ready availability and curability, thioxanthone, 2,3-diethylthioxanthone, 2,4-diethylthioxanthone, 2,4-dichlorothioxanthone, 1-chloro-4-propoxythioxanthone, 2-cyclohexylthioxanthone, 4-cyclohexylthioxanthone, 2-isopropylthioxanthone, and 4-isopropylthioxanthone are preferable, and 2-isopropylthioxanthone and 4-isopropylthioxanthone are more preferable.

The content of Component B-2 is preferably 0.1 to 5.0 wt% of the entire ink composition, and more preferably 0.5 to 3.0 wt%.

### <(Component B-3) α-Hydroxyketone compound>

The ink composition of the present invention may preferably comprise (Component B-3) an α-hydroxyketone compound.

Examples of the α-hydroxyketone compound include 1-[4-(2-hydroxyethoxy)phenyl]-2-hydroxy-2-methyl-1-propan-1-one, 2-hydroxy-2-methyl-1-phenylpropan-1-one, and 1-hydroxycyclohexyl phenyl ketone. Among them, 1-hydroxycyclohexyl phenyl ketone compound is preferable. The 1-hydroxycyclohexyl phenyl ketone compound referred to in the present invention comprises a compound obtained by substituting 1-hydroxycyclohexyl phenyl ketone with any substituent. The substituent may be selected freely from a range that enables an ability as a radical polymerization initiator to be exhibited, and specific examples thereof include an alkyl group having 1 to 4 carbons. Among them, 1-hydroxycyclohexyl phenyl ketone (IRGACURE 184: Ciba Japan) is more preferable.

The content of Component B-3 is preferably 1.0 to 5.0 wt% of the entire ink composition, and more preferably 2.0 to 4.0 wt%.

A preferred embodiment of Component B in the present invention is for it to comprise at least one of Components B-1 to B-3, more preferably Components B-1 and B-2, and yet more preferably all of Components B-1 to B-3.

The total content of Component B in the present invention is preferably 5.0 to 11.0 wt% of the entire ink composition, more preferably 6.0 to 10.0 wt%, and yet more preferably 7.0 to 9.0 wt%.

When in the above-mentioned range, by using it in combination with Component A-1, Component A-2, and Component C an ink composition having excellent discharge stability and little stripe unevenness can be obtained.

The ink composition of the present invention may comprise other polymerization initiator other than Components B-1 to B-3.

Examples of the other polymerization initiator include a monoacylphosphine compound, a-aminoalkylketone, an aromatic ketone, an aromatic onium salt compound, an organic peroxide, a thio compound, a hexaarylbiimidazole compound, a ketoxime ester compound, a borate compound, an azinium compound, a metallocene compound, an active ester compound, and a compound having a carbon-halogen bond.

Details of the above-mentioned polymerization initiators are known to a person skilled in the art, and are described in for example paragraphs 0090 to 0116 of JP-A-2009-185186.

### (Component C) Inert methyl methacrylate homopolymer and/or copolymer having weight-average molecular weight of 4,000 to 120,000

The ink composition of the present invention comprises (Component C) an inert methyl methacrylate homopolymer and/or copolymer having a weight-average molecular weight of 4,000 to 120,000 at a content of at least 0.3 wt% but less than 2.0 wt% relative to the total weight of the ink composition. Component C is explained below.

The 'inert methyl methacrylate homopolymer and/or copolymer' referred to in the ink composition of the present invention means a methyl methacrylate homopolymer and/or copolymer that does not have a polymerizable functional group that can undergo a further chain polymerization reaction and that does not have a crosslinkable and/or crosslinking functional group that can undergo a further sequential crosslinking reaction. That is, it means a methyl methacrylate homopolymer and/or copolymer in a state that causes substantially no polymerization reaction or crosslinking reaction.

Furthermore, in the ink composition of the present invention, the inert methyl methacrylate homopolymer and/or copolymer are preferably dissolved in or miscible with Component A-1 and/or Component A-2, etc. contained in the ink composition of the present invention.

The inert methyl methacrylate homopolymer is not particularly limited, and preferred examples thereof include a homopolymer of methyl methacrylate formed by a known polymerization method and one that is available as a commercial homopolymer product.

Furthermore, the inert methyl methacrylate copolymer is not particularly limited, and preferred examples thereof include a copolymer formed by a known polymerization reaction from methyl methacrylate and another polymerizable compound and one that is available as a commercial copolymer product. The copolymer may be any of a random copolymer, a block copolymer, and a graft copolymer. Preferred examples of the other polymerizable compound that is used for copolymerization include a (meth)acrylate compound. It is more preferably a methacrylate compound.

In accordance with the ink composition of the present invention comprising in combination Components A-1 and A-2, Component B, and Component C with the content of Component C being at least 0.3 wt% but less than 2.0 wt% relative to the total weight of the ink composition, an inkjet ink composition that can give an image having inconspicuous stripe unevenness, for which stretchability and scratch resistance can be achieved at the same time, and that has excellent discharge stability can be obtained.

When the content of Component C is less than 0.3 wt% or exceeds 2.0 wt%, sufficient discharge stability of the ink composition cannot be obtained, and the occurrence of stripe unevenness of an image cannot be suppressed.

It is surmised that the reason why stripe unevenness of an image given by the ink composition of the present invention improves is because the internal curability is improved by the introduction of Component C, which has high hardness, fired droplet interference is thereby suppressed, and an image having inconspicuous stripe unevenness is obtained.

In the ink composition of the present invention, the weight-average molecular weight of Component C is a polystyrene-based weight-average molecular weight measured by a gel permeation chromatography (GPC) measurement method. Specific examples of GPC measurement equipment include an LC-10AD HPLC manufactured by Shimadzu Corporation. Furthermore, this GPC measurement may employ a Shodex GPC-KF-804 manufactured by Showa Denko K.K. as a column and tetrahydrofuran (THF) as an eluent, and weight-average molecular weight is determined by comparison with the molecular weight of standard polystyrene.

The weight-average molecular weight of Component C is at least 4,000 but less than 120,000, preferably 8,000 to 80,000, more preferably 10,000 to 70,000, yet more preferably 10,000 to 60,000, and particularly preferably 12,000 to 50,000. When the weight-average molecular weight of Component C is less than 4,000 or exceeds 120,000, sufficient discharge stability of the ink composition cannot be obtained and the occurrence of stripe unevenness of an image cannot be suppressed. When the weight-average molecular weight of Component C is at least 4,000 but less than 120,000, good discharge stability is obtained, and an image with suppressed stripe unevenness is obtained.

Component C is an inert methyl methacrylate homopolymer and/or copolymer having a weight-average molecular weight of 4,000 to 120,000 and, other than the methyl methacrylate homopolymer, a copolymer of methyl methacrylate with another polymerizable compound can preferably be used. The other polymerizable compound is not particularly limited as long as the copolymer after polymerization is inert, but a (meth)acrylate compound other than methyl methacrylate is preferable, and a methacrylate compound other than methyl methacrylate is more preferable.

Preferred examples of monomers for copolymerization other than methyl methacrylate include ethyl (meth)acrylate, *n*-propyl (meth)acrylate, *i-*propyl (meth)acrylate, *n*-butyl (meth)acrylate, *i*-butyl (meth)acrylate, *s*-butyl (meth)acrylate, *t*-butyl (meth)acrylate, *n*-pentyl (meth)acrylate, *i*-pentyl (meth)acrylate, *t*-pentyl (meth)acrylate, neopentyl (meth)acrylate, 1-naphthyl (meth)acrylate, 2-naphthyl (meth)acrylate, 2-a-naphthoxyethyl (meth)acrylate, 2-β-naphthoxyethyl (meth)acrylate, 2-anthryl (meth)acrylate; 9-anthryl (meth)acrylate, 1-phenanthryl (meth)acrylate, 2-phenanthryl (meth)acrylate, an ethylene oxide-modified cresol (meth)acrylate, *p*-nonylphenoxyethyl (meth)acrylate, *p*-nonylphenoxy polyethylene glycol (meth)acrylate, p-cumylphenoxyethylene glycol (meth)acrylate, 2-furyl (meth)acrylate, 2-furfuryl (meth)acrylate, 2-thienyl (meth)acrylate, 2-thenyl (meth)acrylate, 1-pyrrolyl (meth)acrylate, 2-pyridyl (meth)acrylate, 2-quinolyl (meth)acrylate, norbornyl (meth)acrylate, isobornyl (meth)acrylate, cyclohexyl (meth)acrylate, cyclopentyl (meth)acrylate, cycloheptyl (meth)acrylate, cyclooctyl (meth)acrylate, cyclodecyl (meth)acrylate, dicyclodecyl (meth)acrylate, 3,3,5-trimethylcyclohexyl (meth)acrylate, 4-*t*-butylcyclohexyl (meth)acrylate, acryloylmorpholine, *N*-phthalimidoethyl (meth)acrylate, pentamethyl piperidyl (meth)acrylate, tetramethylpiperidyl (meth)acrylate, 5-(meth)acryloyloxymethyl-5-ethyl-1,3-dioxacyclohexane, 2-ethylhexyl (meth)acrylate, butoxyethyl (meth)acrylate, carbitol (meth)acrylate, *n*-butyl (meth)acrylate, and dimethylaminomethyl (meth)acrylate. Among these, *n-*butyl (meth)acrylate is preferable, and *n*-butyl methacrylate is particularly preferable.

The proportion of methyl methacrylate-derived repeating unit in the methyl methacrylate copolymer used in the ink composition of the present invention is preferably at least 10.0 wt% but less than 100 wt% as a ratio by weight of the copolymer, and more preferably at least 30.0 wt% but less than 100 wt%.

When in the above-mentioned range, the solubility and/or miscibility of the methyl methacrylate copolymer with a polymerizable compound such as Component A-1 or A-2 used in the present invention improve, and it is possible to prevent the discharge stability of the ink composition of the present invention from degrading due to precipitation, etc. Furthermore, the ink composition of the present invention can give a cured image film having high scratch resistance due to the methyl methacrylate moiety of the copolymer having a rigid structure.

Of the inert methyl methacrylate homopolymer and/or copolymer used in the ink composition of the present invention, the homopolymer is preferable in terms of convenience since it is easy to select from homopolymers with various molecular weights, and the copolymer is preferable in terms of ease of changing the physical properties of the copolymer such as solubility or miscibility by selecting the type of other (meth)acrylate monomer.

The inert methyl methacrylate homopolymer and/or copolymer used in the present invention may be obtained by a method known in the art. It may be synthesized by a polymerization reaction of a corresponding (meth)acrylate monomer or may be obtained as a commercial product.

Examples of commercial products of the inert methyl methacrylate homopolymer and/or copolymer that can be used in the present invention include Aldrich's polymethyl methacrylate (molecular weight 10,000, catalog No. 81497; molecular weight 20,000, catalog No. 81498; molecular weight 50,000, catalog No. 81501), and methyl methacrylate/*n*-butyl methacrylate copolymer (ratio by weight 85/15, molecular weight 75,000; catalog No. 474029); Lucite Intenational's ELVACITE 2013 (methyl methacrylate/*n*-butyl methacrylate copolymer, ratio by weight 36/64, molecular weight 37,000), 2021, 2614, 4025, 4026, 4028, etc.; Rohm and Haas's PARALOID DM55, B66 etc.; and Dinal America's BR113, 115, etc.

The content of Component C is at least 0.3 wt% but less than 2.0 wt% relative to the total weight of the ink composition, preferably 0.5 to 1.9 wt%, and particularly preferably 0.8 to 1.8 wt%. When in the above-mentioned range, an ink composition having inconspicuous stripe unevenness and excellent scratch resistance is obtained.

### <Colorant>

In the present invention, the ink composition may preferably contain a colorant in order to improve the visibility of a formed image area.

The colorant is not particularly limited, but a pigment and an oil-soluble dye that have excellent weather resistance and rich color reproduction are preferable, and it may be selected from any known coloring agent such as a soluble dye. It is preferable that the colorant does not function as a polymerization inhibitor in a polymerization reaction, which is a curing reaction. This is because the sensitivity of the curing reaction by actinic radiation should not be degraded.

The pigment that can be used in the present invention is not particularly limited and, for example, organic and inorganic pigments having the numbers below described in the Color Index may be used.

That is, as a red or magenta pigment, C.I. Pigment Red 3 (is also called 'Pigment Red 3'), 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 202, 208, 216, 226, or 257, C.I. Pigment Violet 3 (is also called 'Pigment Violet 3'), 19, 23, 29, 30, 37, 50, or 88, and C.I. Pigment Orange 13 (is also called 'Pigment Orange 13'), 16, 20, or 36; as a blue or cyan pigment, C.I. Pigment Blue 1 (is also called 'Pigment Blue 1'), 15, 15:1, 15:2, 15:3, 15:4, 15:6, 16, 17:1, 22, 27, 28, 29, 36, or 60; as a green pigment, C.I. Pigment Green 7 (is also called 'Pigment Green 7'), 26, 36, or 50; as a yellow pigment, C.I. Pigment Yellow 1 (is also called 'Pigment Yellow 1'), 3, 12, 13, 14, 17, 34, 35, 37, 55, 74, 81, 83, 93, 94, 95, 97, 108, 109, 110, 120, 137, 138, 139, 150, 153, 154, 155, 157, 166, 167, 168, 180, 185, or 193; as a black pigment, C.I. Pigment Black 7 (is also called 'Pigment Black 7'), 28, or 26; as a white pigment, C.I. Pigment White 6 (is also called 'Pigment White 6'), 18, or 21, etc. may be used according to the intended application.

In the present invention, a disperse dye may be used in a range that enables it to be dissolved in a water-immiscible organic solvent. Disperse dyes generally include water-soluble dyes, but in the present invention it is preferable for the disperse dye to be used in a range such that it dissolves in a water-immiscible organic solvent.

Specific preferred examples of the disperse dye include C.I. Disperse Yellow 5, 42, 54, 64, 79, 82, 83, 93, 99, 100, 119, 122, 124, 126, 160, 184:1, 186, 198, 199, 201, 204, 224, and 237; C.I. Disperse Orange 13, 29, 31:1, 33, 49, 54, 55, 66, 73, 118, 119, and 163; C.I. Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; C.I. Disperse Violet 33; C.I. Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and C.I. Disperse Green 6:1 and 9.

The colorant is preferably added to the ink composition and then dispersed in the ink composition to an appropriate degree. For dispersion of the colorant, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

In the preparation of an ink composition, the colorant may be added directly to the ink composition together with other components. Furthermore, in order to improve dispersibility it may be added in advance to a solvent or a dispersing medium such as a polymerizable compound used in the present invention, homogeneously dispersed or dissolved, and then added to the ink composition.

In the present invention, in order to avoid the problem of the solvent resistance being degraded when the solvent remains in the cured image and the VOC (Volatile Organic Compound) problem of the residual solvent, it is preferable to add in advance the colorant to the dispersing medium such as the polymerizable compound. That is, it is preferable that the ink composition does not comprise the solvent. As a polymerizable compound used as the dispersing medium of the colorant, it is preferable in terms of dispersion suitability to select a monomer having the lowest viscosity. The colorants may be used by appropriately selecting one type or two or more types thereof according to the intended purpose of the ink composition.

When a colorant such as a pigment that is present as a solid in the ink composition is used, it is preferable for the colorant, the dispersant, the dispersing medium, dispersion conditions, and filtration conditions to be set so that the average particle size of colorant particles is preferably 0.005 to 0.5 µm, more preferably 0.01 to 0.45 µm, and yet more preferably 0.015 to 0.4 µm. It is preferable for the colorant to control its particle size, since clogging of a head nozzle can be suppressed and the storage stability, transparency, and curing sensitivity of the ink composition can be maintained.

The content of the colorant in the ink composition is appropriately selected according to the color and the intended purpose, and is preferably 0.01 to 30 wt% relative to the weight of the entire ink composition.

### <Dispersant>

The ink composition of the present invention preferably comprises a dispersant. In particular, when the pigment is used, the ink composition preferably comprises a dispersant in order to stably disperse the pigment in the ink composition.

As the dispersant that can be used in the present invention, a polymeric dispersant is preferable. The 'polymeric dispersant' referred to in the present invention means a dispersant having a weight-average molecular weight of 1,000 or greater.

Examples of the polymeric dispersant include polymeric dispersants such as DISPERBYK-101, DISPERBYK-102, DISPERBYK-103, DISPERBYK-106, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK Chemie), EFKA4010, EFKA4046, EFKA4080, EFKA5010, EFKA5207, EFKA5244, EFKA6745, EFKA6750, EFKA7414, EFKA745, EFKA7462, EFKA7500, EFKA7570, EFKA7575, and EFKA7580 (manufactured by EFKA Additives), Disperse Aid 6, Disperse Aid 8, Disperse Aid 15, and Disperse Aid 9100 (manufactured by San Nopco Limited); various types of SOLSPERSE dispersants such as Solsperse 3000, 5000, 9000, 12000, 13240, 13940, 17000, 22000, 24000, 26000, 28000, 32000, 36000, 39000, 41000, and 71000 (manufactured by Noveon); Adeka Pluronic L31, F38, L42, L44, L61, L64, F68, L72, P95, F77, P84, F87, P94, L101, P103, F108, L121, and P-123 (manufactured by Adeka Corporation), lonet S-20 (manufactured by Sanyo Chemical Industries, Ltd.), and Disparlon KS-860, 873SN, and 874 (polymeric dispersant), #2150 (aliphatic poly carboxylic acid), and #7004 (polyether ester type) (manufactured by Kusumoto Chemicals, Ltd.).

The content of the dispersant in the ink composition of the present invention is appropriately selected according to the intended purpose, and is preferably 0.05 to 15 wt % relative to the weight of the entire ink composition.

### <Surfactant>

It is preferable that the ink composition of the present invention comprises neither a silicone-based surfactant nor a fluorine-based surfactant or comprises a total content of silicone-based and fluorine-based surfactants of less than 0.01 wt% relative to the total weight of the ink composition. It is more preferable that the ink composition comprises neither a silicone-based surfactant nor a fluorine-based surfactant or comprises the total content of the both surfactants of no greater than 0.005 wt%, and particularly preferable that the ink composition comprises neither a silicone-based surfactant nor a fluorine-based surfactant.

As a surfactant other than a silicone-based and a fluorine-based surfactants, those described in JP-A-62-173463 and JP-A-62-183457 can be cited. Examples thereof include an anionic surfactant such as a dialkyl sulfosuccinate salt, an alkylnaphthalene sulfonic acid salt, or a fatty acid salt, a nonionic surfactant such as a polyoxyethylene alkyl ether, a polyoxyethylene alkyl allyl ether, an acetylene glycol, or a polyoxyethylene-polyoxypropylene block copolymer, and a cationic surfactant such as an alkylamine salt or a quaternary ammonium salt.

In addition, it is preferable that the ink composition of the present invention also comprises no surfactant other than silicone-based and fluorine-based surfactants or comprises a total content of the surfactant other than silicone-based and fluorine-based surfactants of less than 0.01 wt% relative to the total weight of the ink composition. It is more preferable that the ink composition comprises no surfactant other than silicone-based and fluorine-based surfactants or comprises the total content of the surfactants of no greater than 0.005 wt%, and particularly preferable that the ink composition comprises no surfactant other than silicone-based and fluorine-based surfactants.

### <Other components>

The ink composition of the present invention may comprise as necessary, in addition to the above-mentioned components, a co-sensitizer, a UV absorber, an antioxidant, an antifading agent, a conductive salt, a solvent, a basic compound, etc. As these other components a known component may be used. Examples thereof include components described in JP-A-2009-221416.

Furthermore, from the viewpoint of storage properties and suppression of head clogging, the ink composition of the present invention preferably comprises a polymerization inhibitor.

The content of the polymerization inhibitor is preferably at 200 to 20,000 ppm relative to the total weight of the ink composition of the present invention.

Examples of the polymerization inhibitor include a nitroso-based polymerization inhibitor, a hindered amine-based polymerization inhibitor, hydroquinone, benzoquinone, *p*-methoxyphenol, TEMPO, TEMPOL, and AI cupferron.

### (Inkjet recording method, inkjet recording device, and printed material)

The inkjet recording method of the present invention is a method for forming an image by discharging the ink composition of the present invention onto a recording medium (support, recording material, etc.) for inkjet recording and curing the ink composition by irradiating the ink composition so discharged onto the recording medium with actinic radiation (is also called 'actinic energy ray').

More specifically, the inkjet recording method of the present invention preferably comprises (a¹) a step of discharging the ink composition of the present invention onto a recording medium, and (b¹) a step of curing the ink composition by irradiating the discharged ink composition with actinic radiation.

Due to the inkjet recording method of the present invention comprising steps (a¹) and (b¹) above, an image is formed by the ink composition cured on the recording medium.

Furthermore, the printed material of the present invention is a printed material recorded by the inkjet recording method of the present invention.

In the step (a¹) in the inkjet recording method of the present invention, an inkjet recording device described in detail below may be used.

### <Inkjet recording device>

The inkjet recording device used in the inkjet recording method of the present invention is not particularly limited, and any known inkjet recording device that can achieve an intended resolution may be used. That is, any known inkjet recording device, such as a commercial product, may be selected and used in order to discharge an ink composition onto the recording medium (support) in the step (a¹) of the inkjet recording method of the present invention.

The inkjet recording device that can be used in the present invention is equipped with, for example, an ink supply system, a temperature sensor, and an actinic radiation source.

The ink supply system comprises, for example, a main tank containing the ink composition of the present invention, a supply pipe, an ink composition supply tank immediately before an inkjet head, a filter, and a piezo system inkjet head. The piezo system inkjet head may be driven so as to discharge a multisize dot of preferably 1 to 100 pL, and more preferably 8 to 30 pL, at a resolution of preferably 320 x 320 to 4,000 x 4,000dpi, more preferably 400 x 400 to 1,600 x 1,600dpi, and yet more preferably 720 x 720 dpi. Here, dpi referred to in the present invention means the number of dots per 2.54 cm.

As described above, since it is desirable for the inks of each color to be discharged at a constant temperature, the inkjet recording device is preferably equipped with a temperature stabilizer for stabilizing the temperature of the inks. Parts to be controlled to a constant temperature include all of the supply pipe system and the members from the ink tank (including an intermediate tank if it is provided) to the discharging face of the nozzle. A section from the ink supply tank to the inkjet head is thermally insulated and heated.

A method of controlling temperature is not particularly limited, but it is preferable to provide, for example, temperature sensors at a plurality of pipe section positions, and control heating according to the ink flow rate and the temperature of the surroundings. The temperature sensors may be provided on the ink composition supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

When the ink composition or the inkjet recording ink composition of the present invention is discharged using the above mentioned inkjet recording device, the ink composition is preferably discharged after being heated to preferably 25°C to 80°C, and more preferably 25°C to 50°C, so as to reduce the viscosity of the ink composition to preferably 3 to 15 mPa·s, and more preferably 3 to 13 mPa·s.

A viscosity at 25°C of the ink composition is preferably no more than 50 mPa·s, more preferably 5 to 40 mPa·s, yet more preferably 10 to 30 mPa·s. When in the above-mentioned range, good discharge stability can be obtained. Here, mPa·s means cP (centipoise).

The method for measuring viscosity at 25°C of an ink composition is not particularly limited, but is preferably a measurement method in accordance with JIS Z8803.

Furthermore, as an instrument for measuring viscosity, it is preferable to use a rotational viscometer, and particularly preferably a B or E type rotational viscometer.

As a specific method for measuring viscosity at 25°C of a cationically polymerizable compound and an ink composition, for example, it is preferably measured using a model RE80 viscometer (Toki Sangyo Co., Ltd.) at a liquid temperature of 25°C after stabilizing by rotating for 2 minutes by means of a rotor.

The radiation curing type ink composition such as the ink composition of the present invention generally has a viscosity that is higher than that of a normal ink composition or a water-based ink composition used for an inkjet recording ink composition, and variation in viscosity due to a change in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the temperature of ink composition is preferably ±5°C of a set temperature, more preferably ±2°C of the set temperature, and yet more preferably ±1 °C of the set temperature.

The inkjet head used in the inkjet recording method of the present invention is preferably an inkjet head having a nozzle plate with a face on the ink discharge side treated so as to have affinity for an ink.

As the inkjet head having a nozzle plate with a face on the ink discharge side treated so as to have affinity for an ink, for example, an on-demand inkjet head of a piezo drive system manufactured by FUJIFILM Dimatix, Inc. can be cited. Specific examples thereof include S-class and Q-class Sapphire.

The nozzle plate is a nozzle plate with a face on the ink discharge side treated so as to have affinity for an ink, may be one in which at least part of the face on the ink discharge side has been treated so as to have affinity for an ink, and is preferably one in which the entire face on the ink discharge side has been treated so as to have affinity for an ink.

As a method for ink affinity treatment, there can be cited a method in which at least one non-ink repelling layer is formed on at least part of the surface of a nozzle plate.

Specifically, the nozzle plate preferably comprises, on at least part of the face on the ink discharge side, a layer formed from at least one type selected from the group consisting of gold, stainless steel, iron, titanium, tantalum, platinum, rhodium, nickel, chromium, silicon oxide, silicon nitride, and aluminum nitride, more preferably a layer formed from at least one type selected from the group consisting of gold, stainless steel, iron, titanium, silicon oxide, silicon nitride, and aluminum nitride, yet more preferably a layer formed from at least one type selected from the group consisting of gold, stainless steel, and silicon oxide, and particularly preferably a layer formed from silicon oxide.

As the method for ink affinity treatment, a known method may be used, and examples thereof include, but are not limited to, (1) a method in which a silicon oxide film is formed by thermally oxidizing the surface of a nozzle plate made of silicon, (2) a method in which an oxide film of silicon or a material other than silicon is oxidatively formed or a method in which it is formed by sputtering, and (3) a method in which a metal film is formed. Details of these methods may be referred to in US Pat. Application No. 2010/0141709.

Then (b¹) a step of curing the ink composition by irradiating the discharged ink composition with actinic radiation is explained.

The ink composition discharged onto the recording medium cures upon exposure to actinic radiation. This is due to an initiating species such as a radical being generated by decomposition of the photopolymerization initiator contained in the ink composition of the present invention by irradiation with actinic radiation, the initiating species functioning so as to make a polymerization reaction of a radically polymerizable compound take place and to promote it. In this process, if a sensitizer is present together with the polymerization initiator in the ink composition, the sensitizer in the system absorbs actinic radiation, becomes excited, and promotes decomposition of the polymerization initiator by contact with the polymerization initiator, thus enabling a curing reaction with higher sensitivity to be achieved.

The actinic radiation used in this process may include α rays, γ rays, an electron beam, X rays, UV rays, visible light, and IR rays. Although it depends on the absorption characteristics of the sensitizer, the peak wavelength of the actinic radiation is preferably 200 to 600 nm, more preferably 300 to 450 nm, yet more 320 to 420 nm, and particularly preferably 340 to 400 nm.

Furthermore, in the present invention, the photopolymerization initiation system has sufficient sensitivity for low output actinic radiation. The actinic radiation for curing is applied therefore so that the illumination intensity on the exposed surface is preferably 10 to 4,000 mW/cm², and more preferably 20 to 2,500 mW/cm².

As an actinic radiation source, a mercury lamp, a gas/solid laser, etc. are mainly used, and for UV photocuring inkjet ink composition a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, US Pat. No. 6,084,250 discloses a LED that can emit actinic radiation whose wavelength is centered between 300 nm and 370 nm. Furthermore, another violet LED is available, and irradiation can be carried out with radiation of a different UV bandwidth. The actinic radiation source in the present invention is preferably a UV-LED, and a UV-LED having a peak wavelength at 340 to 400 nm is particularly preferable.

The maximum illumination intensity of the LED on a recording medium is preferably 10 to 2,000 mW/cm², more preferably 20 to 1,000 mW/cm², and particularly preferably 50 to 800 mW/cm².

The ink composition of the present invention is desirably exposed to such actinic radiation for preferably 0.01 to 120 sec., and more preferably 0.1 to 90 sec.

Irradiation conditions and a basic method for irradiation with actinic radiation are disclosed in JP-A-60-132767. Specifically, a light source is provided on either side of a head unit that includes an ink composition discharge device, and the head unit and the light source are made to scan by a so-called shuttle system. Irradiation with actinic radiation is carried out after a certain time (preferably 0.01 to 0.5 sec., more preferably 0.01 to 0.3 sec., and yet more preferably 0.01 to 0.15 sec.) has elapsed from when the ink composition has landed. By controlling the time from ink composition landing to irradiation so as to be a minimum in this way, it becomes possible to prevent the ink composition that has landed on a recording medium from spreading before being cured. Furthermore, since the ink composition can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light. Such curing methods may be also applied to the inkjet recording method of the present invention.

By employing such a inkjet recording method as described above, it is possible to maintain a uniform dot diameter for landed ink composition even for various types of recording medium (support) having different surface wettability, thereby improving the image quality. In order to obtain a color image, it is preferable to superimpose colors in order from those with a high lightness. By superimposing ink compositions in order from one with high lightness, it is easy for radiation to reach a lower ink composition, the curing sensitivity is good, the amount of residual monomer decreases, and an improvement in adhesion can be expected. Furthermore, although it is possible to discharge all colors and then expose them at the same time, it is preferable to expose one color at a time from the viewpoint of promoting curing.

In this way the ink composition of the present invention may be cured by irradiation with actinic radiation in high sensitivity and form an image on the surface of the recording medium.

The inkjet recording method of the present invention may suitably employ the ink set of the present invention. The order in which colored ink compositions are discharged is not particularly limited, but it is preferable to apply to a recording medium from a colored ink composition having a high lightness; when the ink compositions of yellow, cyan, magenta, and black are used, they are preferably applied on top of the recording medium in the order yellow → cyan → magenta → black. Furthermore, when white is additionally used, they are preferably applied on top of the recording medium in the order white → yellow → cyan → magenta → black. Moreover, the present invention is not limited thereto, and an ink set comprising a total of seven colors, that is, light cyan, light magenta ink compositions and cyan, magenta, black, white, and yellow dark ink compositions may preferably be used, and in this case they are applied on top of the recording medium in the order white → light cyan → light magenta → yellow → cyan → magenta → black.

In the present invention, the recording medium is not particularly limited, and a recording medium known as a support and a recording material may be used. Examples thereof include paper, paper laminated with a plastic (e.g. polyethylene, polypropylene, polystyrene, etc.), a metal plate (e.g. aluminum, zinc, copper, etc.), a plastic film (e.g. cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinylacetal, polyvinyl chloride (PVC), acrylic resin, etc.), and paper or plastic film laminated or vapor-deposited with the above metal (e.g. an aluminum composite plate, etc.). In the present invention, as the recording medium, a non-absorbing recording medium may suitably be used.

### EXAMPLES

The present invention is explained below more specifically by reference to Examples and Comparative Examples. However, the present invention should not be construed as being limited by these Examples. 'Parts' in the description below means 'parts by weight' unless otherwise specified.

Materials used in the present invention were as follows.
IRGALITE BLUE GLVO (cyan pigment, Ciba Japan)
CINQUASIA MAGENTA RT-355-D (magenta pigment, Ciba Japan)
NOVOPERM YELLOW H2G (yellow pigment, Clariant)
SPECIAL BLACK 250 (black pigment, Ciba Japan)
TIPAQUE CR60-2 (white pigment, Ishihara Sangyo Kaisha Ltd.)
SOLSPERSE 32000 (dispersant, Noveon)
SOLSPERSE 41000 (dispersant, Noveon)
V-CAP (*N*-vinylcaprolactam, ISP)
SR508 (dipropylene glycol diacrylate, Sartomer)
SR531 (cyclic trimethylolpropane formal acrylate (CTFA), Sartomer)
SR285 (tetrahydrofurfuryl acrylate, Sartomer)
SR339 (phenoxyethyl acrylate, Sartomer)
SR506 (isobornyl acrylate, Sartomer)
FIRSTCURE ST-1 (polymerization inhibitor, mixture of tris(*N*-nitroso-*N-*phenylhydroxyamine) aluminum salt (10 wt%) and phenoxyethyl acrylate (90 wt%), Chem First)
IRGACURE 819 (bisacylphosphine photopolymerization initiator, Ciba Japan) IRGACURE 184 (photopolymerization initiator, 1-hydroxycyclohexyl phenyl ketone, Ciba Japan)
SPEEDCURE ITX (photopolymerization initiator, isopropylthioxanthone, LAMBSON)
TEGORAD 2100 (silicone-based surfactant, Degussa)
Polymethyl methacrylate (weight-average molecular weight (Mw): 1,900, Aldrich, catalog No. 81489)
Polymethyl methacrylate (Mw: 4,200, Aldrich, catalog No. 94131)
Polymethyl methacrylate (Mw: 8,290, Aldrich, catalog No. 81512)
Polymethyl methacrylate (Mw: 10,000, Aldrich, catalog No. 81497)
Polymethyl methacrylate (Mw: 20,000, Aldrich, catalog No. 81498)
Polymethyl methacrylate (Mw: 50,000, Aldrich, catalog No. 81501)
Polymethyl methacrylate (Mw: 75,000, Aldrich, catalog No. 81502)
Polymethyl methacrylate (Mw: 100,000, Aldrich, catalog No. 81503)
Polymethyl methacrylate (Mw: 120,000, Aldrich, catalog No. 182230)
Polymethyl methacrylate (Mw: 150,000, Aldrich, catalog No. 81504)
Polymethyl methacrylate (Mw: 350,000, Aldrich, catalog No. 445746)
Methyl methacrylate/*n*-butyl methacrylate copolymer (ratio by weight 85/15) (Mw: 75,000, Aldrich, catalog No. 474029)
ELVACITE 2013: methyl methacrylate/*n*-butyl methacrylate copolymer (ratio by weight 36/64, Mw: 37,000, Lucite International)

### Preparation of cyan mill base A

300 parts by weight of IRGALITE BLUE GLVO, 620 parts by weight of SR339, and 80 parts by weight of SOLSPERSE 32000 were mixed by stirring, thus giving cyan mill base A. Preparation of cyan mill base A was carried out by dispersing using a Motor Mill M50 disperser (Eiger Machinery, Inc.) with zirconia beads having a diameter of 0.65 mm at a peripheral speed of 9 m/s for 4 hours.

### Preparation of magenta mill base B

300 parts by weight of CINQUASIA MAGENTA RT-355-D, 600 parts by weight of SR339, and 100 parts by weight of SOLSPERSE 32000 were mixed by stirring, thus giving magenta mill base B. Preparation of magenta mill base B was carried out by dispersing using a Motor Mill M50 disperser (Eiger Machinery, Inc.) with zirconia beads having a diameter of 0.65 mm at a peripheral speed of 9 m/s for 10 hours.

### Preparation of yellow mill base C

300 parts by weight of NOVOPERM YELLOW H2G, 600 parts by weight of SR339, and 100 parts by weight of SOLSPERSE 32000 were mixed by stirring, thus giving yellow mill base C. Preparation of yellow mill base C was carried out by dispersing using a Motor Mill M50 disperser (Eiger Machinery, Inc.) with zirconia beads having a diameter of 0.65 mm at a peripheral speed of 9 m/s for 10 hours.

### Preparation of black mill base D

400 parts by weight of SPECIAL BLACK 250, 520 parts by weight of SR339, and 80 parts by weight of SOLSPERSE 32000 were mixed by stirring, thus giving black mill base D. Preparation of black mill base D was carried out by dispersing using a Motor Mill M50 disperser (Eiger Machinery, Inc.) with zirconia beads having a diameter of 0.65 mm at a peripheral speed of 9 m/s for 7 hours.

### Preparation of white mill base E

500 parts by weight of TIPAQUE CR60-2, 440 parts by weight of SR339, and 60 parts by weight of SOLSPERSE 41000 were mixed by stirring, thus giving white mill base E. Preparation of white mill base E was carried out by dispersing using a Motor Mill M50 disperser (Eiger Machinery, Inc.) with zirconia beads having a diameter of 0.65 mm at a peripheral speed of 9 m/s for 4 hours.

### <Method of preparing ink composition>

Ink compositions of Examples 1 to 30 and Comparative Examples 1 to 11 were obtained by mixing and stirring the materials shown in Table 1 and Table 2.

### Method for measurement of surface tension

The surface tension of an ink composition was measured at 25°C using a SIGMA 702 surface tensiometer (suspended ring method, KSV Instruments Ltd.).

### {Method of measuring viscosity}

The viscosity of an ink composition was measured using a Model RE80 viscometer (Toki Sangyo Co., Ltd.) after it was stabilized by rotating using a rotor at a liquid temperature of 25°C for 2 minutes.

### Inkjet recording method

Inkjet images were printed in bidirectional print mode (high productivity mode) and Fineart mode (high resolution mode) using an Acuity Advance UV curing type inkjet printer (FUJIFILM Corporation). Fineart mode is printing carried out in multipass mode in which the same image area is drawn with 8 passes. The printer was equipped with UV lamp light sources at left and right positions of the head unit, and in bidirectional print mode the same image area is exposed to UV 16 times during drawing 8 times with the multiple passes.

A 100% solid image was printed on Avery Permanent 400 (polyvinyl chloride (PVC), Avery) at a resolution of 600 x 450 dpi with a size of 30 cm x 30 cm. The lamp was equipped with SUB ZERO 085 H bulb lamp units manufactured by Integration Technology.

When the exposure area illumination intensity was measured during printing it was found to be 690 mW/cm².

### Evaluation of curability

The degree of tackiness of an image obtained by the above-mentioned inkjet recording method was evaluated by touch using the criteria below.
5: there was no tackiness on the image.
4: there was slight tackiness on the image, but at a level that did not give any problem in practice.
3: the image was slightly tacky, but uncured ink composition or cured film did not transfer to the hand.
2: the image was slightly tacky, and uncured ink composition or cured film transferred to the hand at a slight level.
1: the image had considerable tackiness, and some uncured ink composition or cured film transferred to the hand.

### <Evaluation of scratch resistance>

The scratch resistance of an image obtained by the above-mentioned inkjet recording method was evaluated using a pencil hardness test method in accordance with JIS K5600-5-4.
5: hardness was 4H to 6H
4: hardness was 2H to 3H
3: hardness was H, F, or HB
2: hardness was B to 2B
1: hardness was 3B to 6B

### <Evaluation of stretchability>

The stretchability was evaluated by the method below. A printed material formed by the above-mentioned inkjet recording method was cut into a piece having a length in the tensile direction of 12 cm and a width of 4 cm, and only a piece with the printed image was stretched using an INSTRON 5544 tensile machine (Instron) at a speed of 5 cm/min. 1 cm each of upper and lower parts were clamped by clips, and printed material having a length between the upper and lower clips of 10 cm was stretched. The stretching ratio {(length of printed material when film was broken/initial length (10 cm)) - 1} × 100% when the film was broken was determined.
5: stretching ratio was at least 180%
4: stretching ratio was at least 140% but less than 180%
3: stretching ratio was at least 100% but less than 140%
2: stretching ratio was at least 50% but less than 100%
1: stretching ratio was less than 50%

### <Evaluation of discharge stability (10 pL)>

After the ink composition obtained was stored at room temperature for two weeks, recording on a recording medium was carried out using inkjet recording equipment having a Q-class Sapphire QS-256/10 inkjet head with a nozzle plate treated so as to have affinity for an ink (FUJIFILM Dimatix, Inc., number of nozzles 256, liquid droplet volume 10 pL, 50 kHz, ink affinity treatment: silicon oxide) with the discharged liquid droplets fixed at 10 pL, and the presence or absence of dot dropouts and ink scattering was visually examined when printing was carried out continuously for 10 minutes and 60 minutes and evaluated using the criteria below. Discharge was carried out by adjusting the head temperature so that the discharge viscosity was 9.0 ± 0.2 cP.
5: no occurrence of dot dropouts or ink scattering
4: 1 to 3 occurrences of dot dropouts or ink scattering
3: 4 to 10 occurrences of dot dropouts or ink scattering
2: 11 to 20 occurrences of dot dropouts or ink scattering
1: 21 or more occurrences of dot dropouts or ink scattering

### <Evaluation of discharge stability (30 pL)>

After the ink composition obtained was stored at room temperature for two weeks, recording on a recording medium was carried out using inkjet recording equipment having a Q-class Sapphire QS-256/30 inkjet head with a nozzle plate treated so as to have affinity for an ink (FUJIFILM Dimatix, Inc., number of nozzles 256, liquid droplet volume 30 pL, 16 kHz, ink affinity treatment: silicon oxide) with the discharged liquid droplets fixed at 30 pL, and the presence or absence of dot dropouts and ink scattering was visually examined when printing was carried out continuously for 10 minutes and 60 minutes and evaluated using the criteria below. Discharge was carried out by adjusting the head temperature so that the discharge viscosity was 9.0 ± 0.2 cP.
5: no occurrence of dot dropouts or ink scattering
4: 1 to 3 occurrences of dot dropouts or ink scattering
3: 4 to 10 occurrences of dot dropouts or ink scattering
2: 11 to 20 occurrences of dot dropouts or ink scattering
1: 21 or more occurrences of dot dropouts or ink scattering

The evaluation results of the Examples and Comparative Examples are shown in Table 1 and Table 2. An evaluation result rank of 3 or higher is an acceptable level.

In the tables, PMMA denotes polymethyl methacrylate homopolymer. Furthermore, PMMA/Pn-BMA denotes methyl methacrylate/*n*-butyl methacrylate copolymer. '-' denotes none being contained.

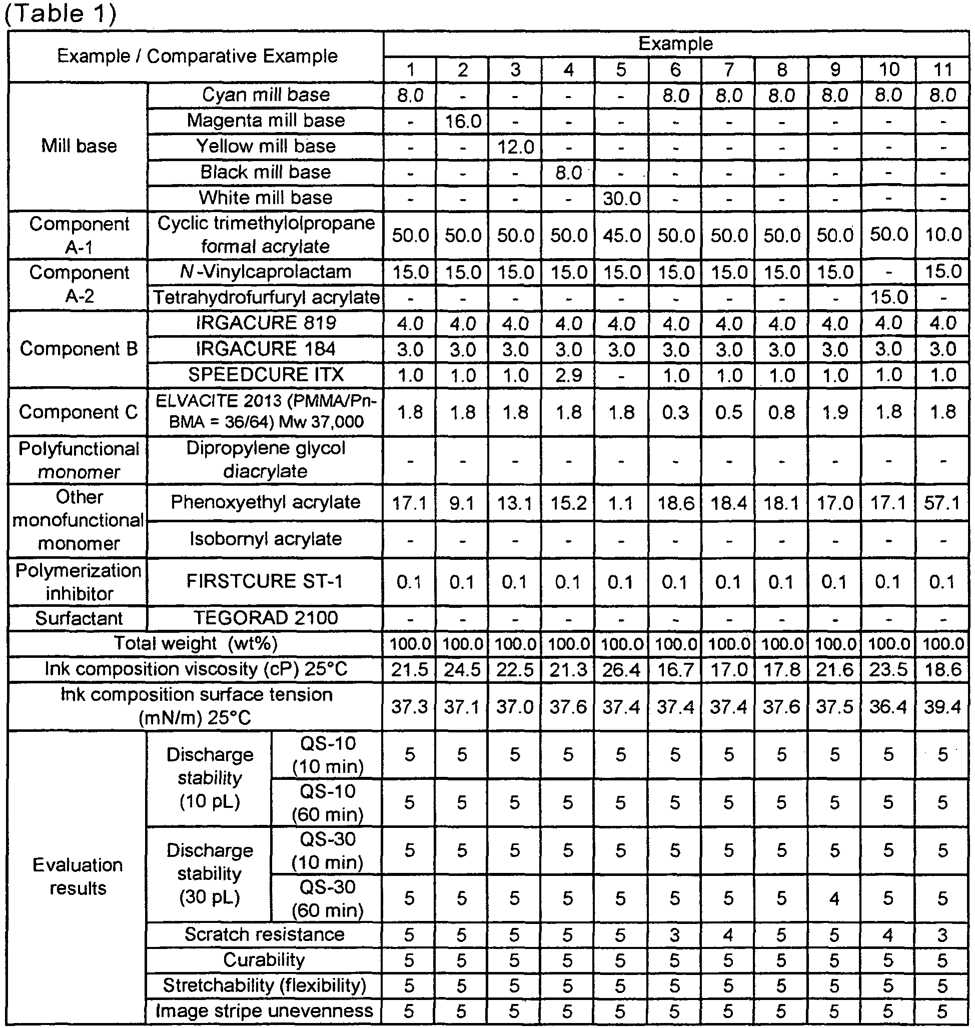

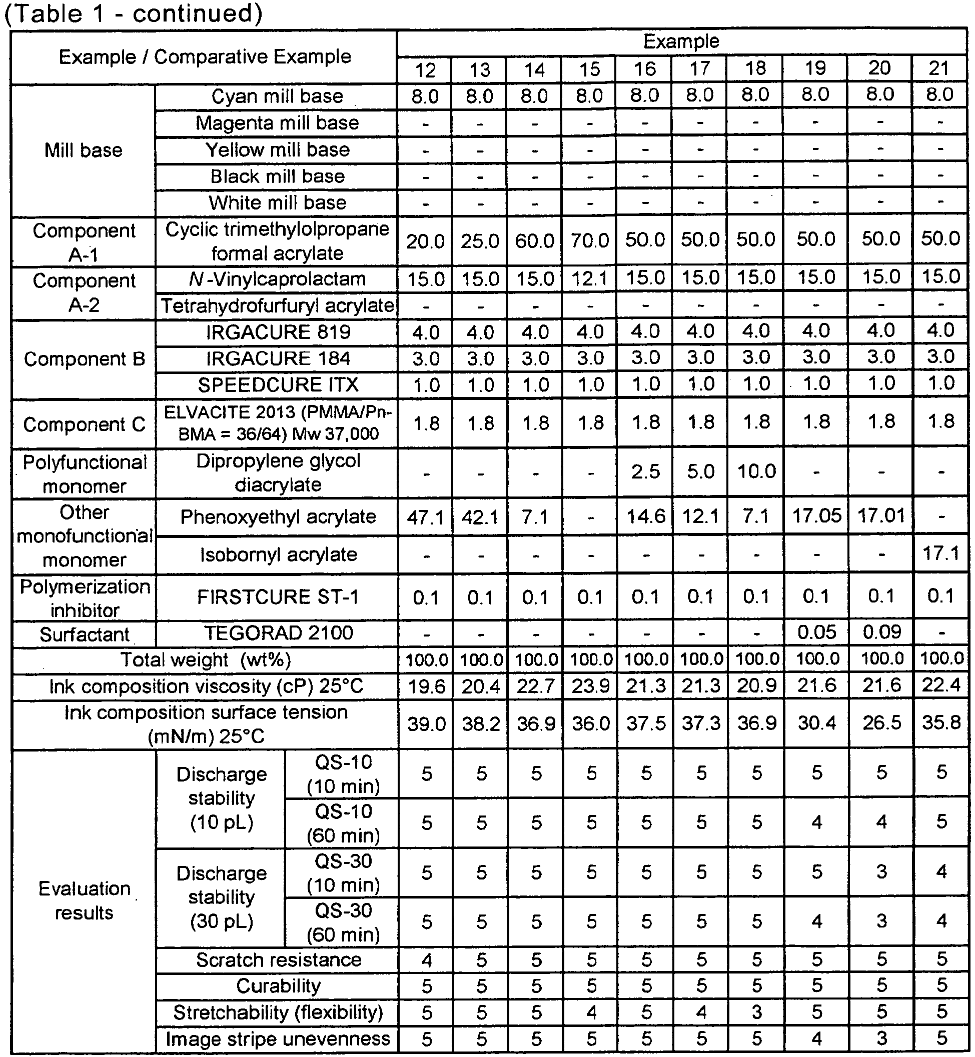

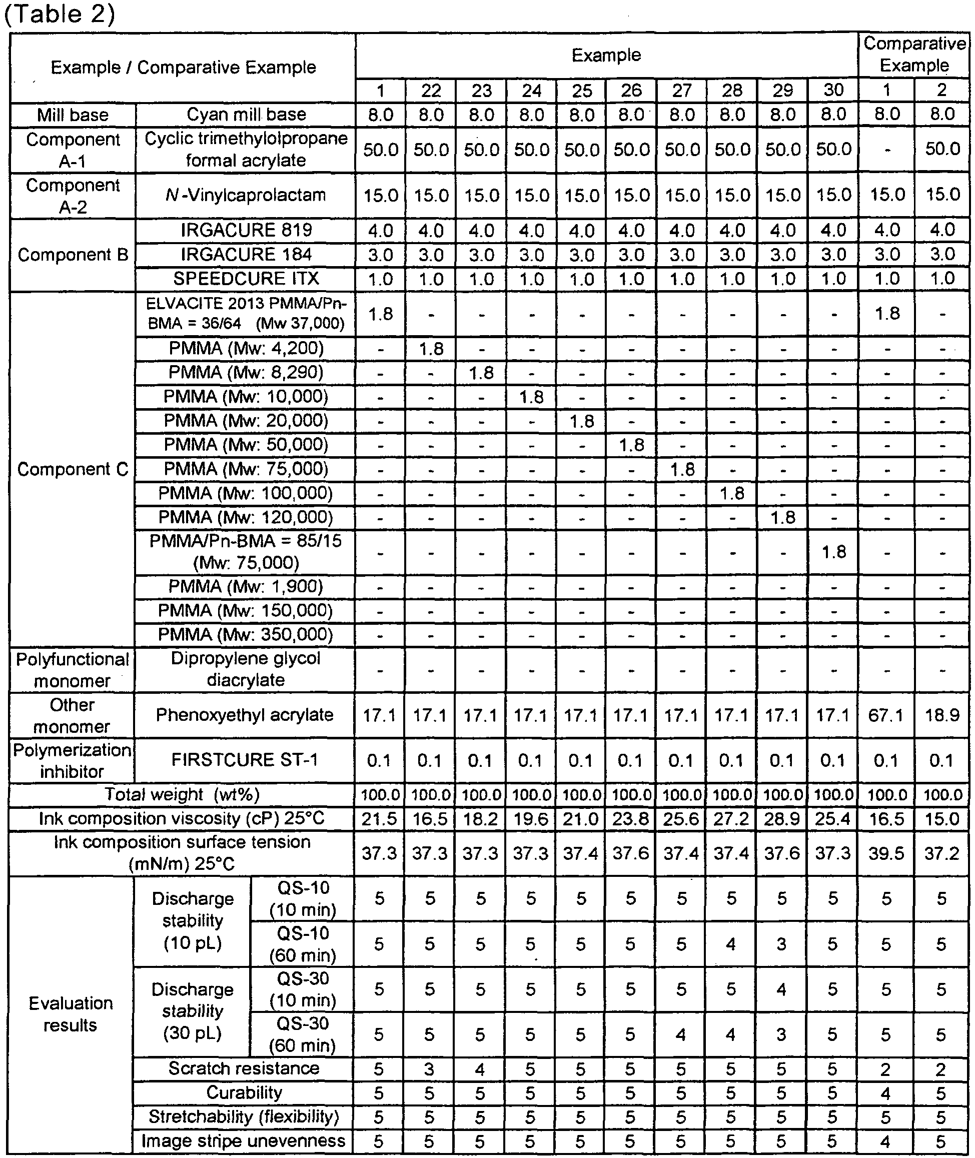

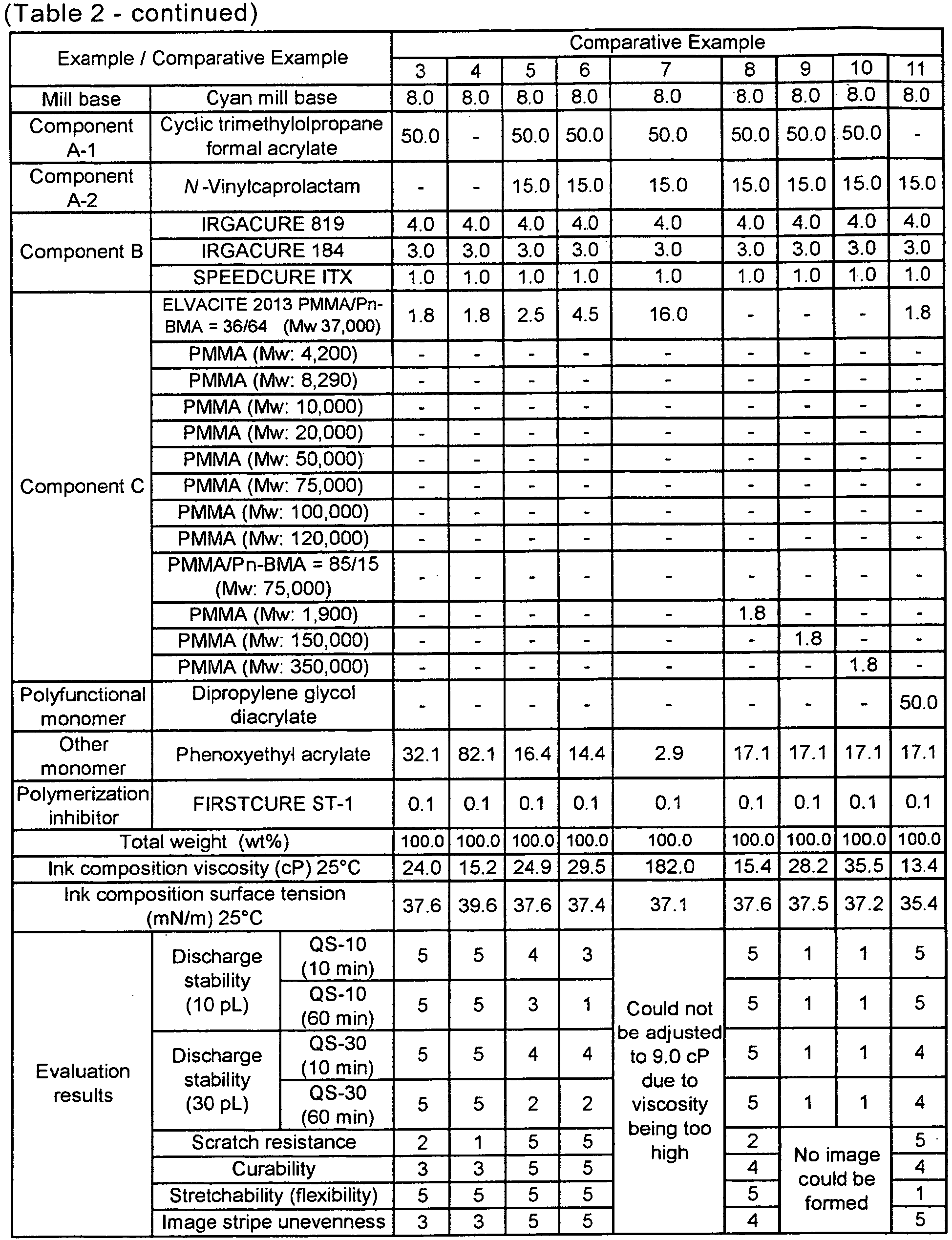

## Claims

1. An inkjet ink composition comprising:
(Component A-1) a compound represented by Formula (1),
(Component A-2) an *N*-vinyllactam and/or tetrahydrofurfuryl acrylate,
(Component B) a polymerization initiator, and
(Component C) an inert methyl methacrylate homopolymer and/or copolymer having a weight-average molecular weight of 4,000 to 120,000,
Component C having a content of at least 0.3 wt% but less than 2.0 wt% relative to the total weight of the ink composition, 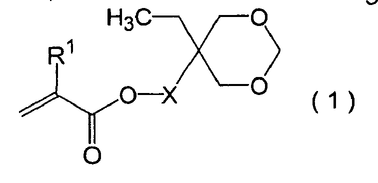
wherein R¹ denotes a hydrogen atom or a methyl group and X denotes a single bond or a divalent linking group.

2. The inkjet ink composition according to Claim 1, wherein the inkjet ink composition further comprises a monofunctional (meth)acrylate compound other than Component A-1 and Component A-2.

3. The inkjet ink composition according to Claim 2, wherein the monofunctional (meth)acrylate compound other than Component A-1 and Component A-2 is isobornyl (meth)acrylate and/or phenoxyethyl (meth)acrylate.

4. The inkjet ink composition according to any one of Claims 1 to 3, wherein the content of Component C is 0.8 to 1.8 wt% relative to the total weight of the ink composition.

5. The inkjet ink composition according to any one of Claims 1 to 4, wherein the inkjet ink composition further comprises a polyfunctional (meth)acrylate compound at 0.01 to 5.0 wt% relative to the total weight of the ink composition.

6. The inkjet ink composition according to any one of Claims 1 to 5, wherein the inkjet ink composition has a surface tension at 25°C of 33.0 to 39.0 mN/m.

7. The inkjet ink composition according to any one of Claims 1 to 6, wherein the inkjet ink composition either does not comprise a silicone-based surfactant or a fluorine-based surfactant or comprises a silicone-based surfactant and a fluorine-based surfactant at a total content of less than 0.1 wt% relative to the entire weight of the inkjet ink composition.

8. The inkjet ink composition according to any one of Claims 1 to 7, wherein the weight-average molecular weight of Component C is 10,000 to 70,000.

9. The inkjet ink composition according to any one of Claims 1 to 8, wherein Component C is a methyl methacrylate homopolymer and/or a copolymer having a methyl methacrylate-derived repeating unit proportion of at least 30.0 wt%.

10. The inkjet ink composition according to any one of Claims 1 to 9, wherein Component C is a methyl methacrylate homopolymer and/or a methyl methacrylate/*n*-butyl methacrylate copolymer.

11. An inkjet recording method comprising:
(a¹) a step of discharging the inkjet ink composition according to any one of Claims 1 to 10 onto a recording medium; and
(b¹) a step of curing the inkjet ink composition by irradiating the discharged inkjet ink composition with actinic radiation.

## Patentansprüche

1. Tintenstrahltintenzusammensetzung, umfassend:
(Komponente A-1) eine Verbindung mit der Formel (1),
(Komponente A-2) ein N-Vinyllactam und/oder Tetrahydrofurfurylacrylat,
(Komponente B) einen Polymerisationsinitiator, und
(Komponente C) ein inertes Methylmethacrylat-Homopolymer und/oder -Copolymer mit einem Molekulargewicht im Gewichtsmittel von 4000 bis 120000,
wobei die Komponente C einen Gehalt von wenigstens 0,3 Gew.-%, aber weniger als 2,0 Gew.-% in Bezug auf das Gesamtgewicht der Tintenzusammensetzung hat, 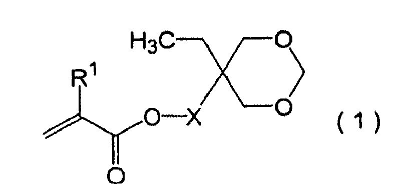
worin R¹ ein Wasserstoffatom oder eine Methylgruppe ist und X eine Einfachbindung oder bivalente Bindegruppe ist.

2. Tintenstrahltintenzusammensetzung nach Anspruch 1, worin die Tintenstrahltintenzusammensetzung weiterhin eine andere monofunktionelle (Meth)acrylatverbindung als die Komponente A-1 und die Komponente A-2 enthält.

3. Tintenstrahltintenzusammensetzung nach Anspruch 2, worin die andere monofunktionelle (Meth)acrylatverbindung als die Komponente A-1 und die Komponente A-2 Isobornyl(meth)acrylat und/oder Phenoxyethyl(meth)acrylat ist.

4. Tintenstrahltintenzusammensetzung nach einem der Ansprüche 1 bis 3, worin der Gehalt der Komponente C 0,8 bis 1,8 Gew.-% in Bezug auf das Gesamtgewicht der Tintenzusammensetzung ist.

5. Tintenstrahltintenzusammensetzung nach einem der Ansprüche 1 bis 4, worin die Tintenstrahltintenzusammensetzung weiterhin eine polyfunktionelle (Meth)acrylatverbindung in einer Menge von 0,01 bis 5,0 Gew.-% enthält, bezogen auf das Gesamtgewicht der Tintenzusammensetzung.

6. Tintenstrahltintenzusammensetzung nach einem der Ansprüche 1 bis 5, worin die Tintenstrahltintenzusammensetzung eine Oberflächenspannung bei 25°C von 33,0 bis 39,0 mN/m hat.

7. Tintenstrahltintenzusammensetzung nach einem der Ansprüche 1 bis 6, worin die Tintenstrahltintenzusammensetzung entweder kein Tensid auf Silikonbasis oder Tensid auf Fluorbasis enthält oder ein Tensid auf Silikonbasis und ein Tensid auf Fluorbasis bei einem Gesamtgehalt von weniger als 0,1 Gew.-% enthält, bezogen auf das Gesamtgewicht der Tintenstrahltintenzusammensetzung.

8. Tintenstrahltintenzusammensetzung nach einem der Ansprüche 1 bis 7, worin das Molekulargewicht im Gewichtsmittel der Komponente C 10000 bis 70000 ist.

9. Tintenstrahltintenzusammensetzung nach einem der Ansprüche 1 bis 8, worin die Komponente C ein Methylmethacrylat-Homopolymer und/oder -Copolymer mit einem Gehalt der Wiederholungseinheit, die von Methylmethacrylat stammt, von wenigstens 30,0 Gew.-% ist.

10. Tintenstrahltintenzusammensetzung nach einem der Ansprüche 1 bis 9, worin die Komponente C ein Methylmethacrylat-Homopolymer und/oder ein Methylmethacrylat/n-Butylmethacrylat-Copolymer ist.

11. Tintenstrahlaufzeichnungsverfahren umfassend:
(a¹) einen Schritt des Entladens der Tintenstrahltintenzusammensetzung nach einem der Ansprüche 1 bis 10 auf ein Aufzeichnungsmedium, und
(b¹) einen Schritt des Härtens der Tintenstrahltintenzusammensetzung durch Bestrahlung der entladenen Tintenstrahltintenzusammensetzung mit aktinischer Strahlung.

## Revendications

1. Composition d'encre pour jet d'encre comprenant :
(Composant A-1) un composé représenté par la Formule (1),
(Composant A-2) un N-vinyllactame et/ou un acrylate de tétrahydrofurfuryle,
(Composant B) un initiateur de polymérisation, et
(Composant C) un homopolymère et/ou copolymère de méthacrylate de méthyle inerte ayant un poids moléculaire moyen en poids de 4 000 à 120 000,
le Composant C ayant une teneur d'au moins 0,3% en poids mais moins de 2,0% en poids par rapport au poids total de la composition d'encre, 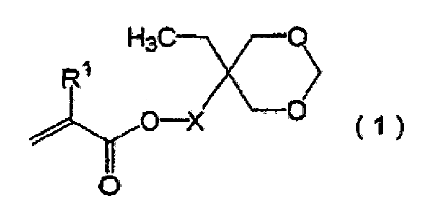 dans laquelle R¹ dénote un atome d'hydrogène ou un groupe méthyle et X dénote une liaison simple ou un groupe de liaison divalent.

2. Composition d'encre pour jet d'encre selon la revendication 1, dans laquelle la composition d'encre pour jet d'encre comprend en outre un composé (méth)acrylate monofonctionnel autre que le Composant A-1 et le Composant A-2.

3. Composition d'encre pour jet d'encre selon la revendication 2, dans laquelle le composé (méth)acrylate monofonctionnel autre que le Composant A-1 et le Composant A-2 est un (méth)acrylate d'isobornyle et/ou un (méth)acrylate de phénoxyéthyle.

4. Composition d'encre pour jet d'encre selon l'une quelconque des revendications 1 à 3, dans laquelle la teneur de Composant C est 0,8 à 1,8% en poids par rapport au poids total de la composition d'encre.

5. Composition d'encre pour jet d'encre selon l'une quelconque des revendications 1 à 4, dans laquelle la composition d'encre pour jet d'encre comprend en outre un composé (méth)acrylate polyfonctionnel à 0,01 à 5,0% en poids par rapport au poids total de la composition d'encre.

6. Composition d'encre pour jet d'encre selon l'une quelconque des revendications 1 à 5, dans laquelle la composition d'encre pour jet d'encre a une tension superficielle à 25°C de 33,0 à 39,0 mN/m.

7. Composition d'encre pour jet d'encre selon l'une quelconque des revendications 1 à 6, dans laquelle la composition d'encre pour jet d'encre soit ne comprend ni un agent tensioactif à base de silicone, ni un agent tensioactif à base de fluor, soit comprend un agent tensioactif à base de silicone et un agent tensioactif à base de fluor à une teneur totale de moins de 0,1% en poids par rapport au poids total de la composition d'encre pour jet d'encre.

8. Composition d'encre pour jet d'encre selon l'une quelconque des revendications 1 à 7, dans laquelle le poids moléculaire moyen en poids du Composant C est 10 000 à 70 000.

9. Composition d'encre pour jet d'encre selon l'une quelconque des revendications 1 à 8, dans laquelle le Composant C est un homopolymère de méthacrylate de méthyle et/ou un copolymère ayant une proportion d'unités répétitives dérivées du méthacrylate de méthyle d'au moins 30,0% en poids.

10. Composition d'encre pour jet d'encre selon l'une quelconque des revendications 1 à 9, dans laquelle le Composant C est un homopolymère de méthacrylate de méthyle et/ou un copolymère de méthacrylate de méthyle/méthacrylate de n-butyle.

11. Procédé d'enregistrement par jet d'encre comprenant :
(a¹) une étape de décharge de la composition d'encre pour jet d'encre selon l'une quelconque des revendications 1 à 10 sur un support d'enregistrement ; et
(b¹) une étape de durcissement de la composition d'encre pour jet d'encre en éclairant la composition d'encre pour jet d'encre déchargée avec un rayonnement actinique.
